# EUROPEAN PATENT APPLICATION

(11) **EP 2 939 547 A1**
(43) Date of publication of application: **04.11.2015**
(21) Application number: 15165641.0
(22) Date of filing: 29.04.2011
(51) Int. Cl.: A23L 1/00, A23L 1/053, A23L 1/059, A23L 1/09, A23G 4/06

(54) **CHEWING GUM WITH PRETREATED POLYOLS**

(30) Priority: 30.04.2010 US 329855 P
(62) Divisional of application: 11717919.2
(71) Applicant: Intercontinental Great Brands LLC, East Hanover, NJ 07936 (US); Mondelez Japan Limited, Shingawa-ku Tokyo 141-8656 (JP)
(72) Inventor: Adivi, Krishna Mohan, Summit, NJ New Jersey 07901 (US); Beam, Matthew, Alexandria, KY 41001-7896. (US); Enomoto, Koichi, Shingagawa-ku, Tokyo 141 8656 (JP); Kabse, Kishor, Morris Plains, NJ New Jersey 07950 (US); Chizuru, Kajya, Shinagawa-ku, Tokyo 141 8656 (JP); Koseki, Takaya, Shinagawa-ku, Tokyo 141 8656 (JP); Miladinov, Vesselin, Denville, NJ New Jersey 07834 (US)
(74) Representative: Wilson Gunn

(57) **Abstract**

Disclosed herein are polyol particles treated to modify the properties of the polyol. Polyol particles are coated with a crunch material coating composition to provide a particulate crunch material. Alternatively, hygroscopic polyol particles are coated with an inorganic material to provide a polyol having a reduced capacity for moisture absorption. Also disclosed herein is the incorporation of such pretreated polyol particle compositions in chewing gum.

## Description

### TECHNICAL FIELD

The present invention pertains to polyol particles, which are treated i.e. coated, to modify the properties of the polyol. The present invention further pertains to the incorporation of such polyol particles in chewing gum.

### BACKGROUND

There are a wide variety of chewing gum products available today. One example of chewing gum includes a liquid or center-filled gum. Conventional liquid center-filled gum products have a liquid-filled center portion, a second layer of chewing gum or bubble gum material surrounding a liquid having a syrup-like consistency, and optionally, a hard outer shell or coating. Another example includes chewing gum products having a chewing gum or bubble gum core with a hard sugar or sugarless shell on the exterior. These products include, for example well-known pellet gum products sold under the brand names Chiclets®, Clorets®, and Dentyne-Ice®. Chewing gums with a crunch have also become important commercially. Such gums can be sugar-based and contain crystals of sucrose, or granulated sugar, which provide the crunch.

The use of polyols, also known as sugar alcohols, in the manufacture of sugarless chewing gum products is well known. Examples of polyols include sorbitol, isomalt, mannitol, maltose, xylitol, polyglycitol, and the like. The polyols, which can be hygroscopic or non-hygroscopic in nature, are used to provide bulk and/or sweetness to the gum. A non-hygroscopic polyol refers to a polyol that does not readily absorb water from its surroundings while a hygroscopic polyol has a high porosity, and thus readily absorbs liquid from its surroundings, particularly under conditions of high humidity. However, the use of hygroscopic polyols, for example sorbitol, in chewing gum often leads to unfavorable properties such as hardening and moisture absorption in a humid environment, or a gum product having a poor surface finish and surface stickiness when exposed to a humid environment. The absorption of moisture by hygroscopic polyols is particularly problematic in liquid or center-filled chewing gums, as liquid-fill chewing gum compositions including sorbitol also possess the unfavorable property of absorbing the liquid from the liquid-fill composition, thus rendering the liquid fill gum with a loss of liquidity. This results in a product that is not commercially acceptable as loss of the center-fill not only impacts the initial organoleptic qualities of the gum, i.e., initial liquid "burst", but also can alter the physical appearance and overall shelf-life stability of the product.

There is therefore a need for a chewing gum with a decreased capacity to absorb moisture from the environment. There is also a need for a center-filled gum, which retains its liquid center during manufacturing and during its shelf-life. It is particularly desirable to provide liquid center-filled chewing gum that can employ a hygroscopic polyol such as sorbitol without the absorption problems exhibited in the past. As such, there is a need for polyol particles which can be effectively used in chewing gum but which have been modified to have a reduced level of hygroscopicity.

Polyols are also potential candidates for providing a sugarless crunch to crunchy chewing gums. The use of granulated isomalt in chewing gum to provide a crunchy texture to the gum has been described (US 5,958,472). In order to be commercially acceptable, it is desired that the polyol have a long chew time before the crunchiness has substantially dissipated. In this regard, crunch-providing gums having internally distributed crunchy polyols are not similar to gums having a hard outside coating, as the manufacturing and storage problems are quite different. It is also desired that the crunch provided by the sugarless substitute be similar to that provided by granulated sugar.

In addition to providing crunch, the particular polyol must also be storage stable, i.e. the crunchiness must be retained after a commercially acceptable storage time. Further, the flavors and softeners in the gum product should not soften the polyol and thus reduce the crunch, and the process for formation of the additive should be economically feasible.

However, it has been difficult to obtain a suitable crunchy feeling in chewing gum, particularly pellet gum products, using a granulated polyol. The inclusion of conventional polyol additives provides crunchiness to the gum that is accompanied by an unpleasant, heavy and unsuitable feel when a chewing gum including the additive is being chewed.

It would thus be desirable to provide polyol particles which have been modified to provide a sufficient level of "crunchiness", and which can be utilized to form a pellet chewing gum product having a distinct crunchy texture or feel in the mouth where the crunchy feel is maintained over an extended period of chew time. It would be further desirable to provide a pellet gum having a crunchy feel that maintains this characteristic under commercially desirable storage conditions.

### SUMMARY

In one embodiment, a particulate crunch material comprises particles of a first polyol coated with a crunch material coating composition, wherein the crunch material coating composition comprises gum arabic.

In another embodiment, a polyol composition having reduced moisture-absorbing properties is provided which comprises particles of a polyol selected from the group consisting of sorbitol, maltitol, xylitol, lactilol, polyglycitol and a combination comprising at least one of the foregoing polyols; and particles of an inorganic material, wherein the particles of the inorganic material are coated on the polyol particles.

In one embodiment, a crunchy chewing gum composition comprises a gum core comprising a gum base and a particulate crunch material, the particulate crunch material comprising particles of a first polyol coated with a crunch material coating composition, wherein the crunch material coating composition comprises gum arabic.

In another embodiment, a chewing gum composition comprises a liquid-fill composition; a gum region surrounding the liquid fill composition, the gum region comprising a gum base and a polyol composition having reduced moisture-absorbing properties; and an optional outer coating surrounding the gum region, wherein the polyol composition having reduced moisture-absorbing properties comprises particles of hygroscopic polyol and particles of an inorganic material, and wherein particles of the hygroscopic polyol are coated with particles of the inorganic material.

The above described and other features are exemplified by the following detailed description.

### DETAILED DESCRIPTION

Embodiments described herein pertain to polyol particles, which are treated prior to the inclusion of such particles in chewing gum. Treatment of the polyol particles includes the application of one or more coatings on the surface of the polyol particles. As a result of the pretreatment, the properties of the polyol particles described herein are modified as compared to polyol particles that have not been pretreated.

In some embodiments, polyol particles are treated with a crunch material coating composition to provide a particulate crunch material. The crunch material coating composition is coated on the polyol particles. In one embodiment, the crunch material coating composition comprises gum arabic. The presence of gum arabic in the crunch material coating composition provides the particulate crunch material with the desired level of crunchiness. Inclusion of the particulate crunch material in chewing gum alters the textural properties of the gum to provide a chewing gum exhibiting a high degree of crunchiness. The particulate crunch material provides for a long lasting crunch and a commercially acceptable storage time.

In other embodiments, chewing gums containing the particulate crunch material are provided. Disclosed herein is a crunchy chewing gum composition that includes a gum core and a particulate crunch material contained within the gum core. Chewing gum formulations containing the particulate crunch material have a crunchy texture or feel similar to that provided by granulated sugar, and maintain this crunchy feel over an extended period of time.

In some embodiments, particles of a hygroscopic polyol are treated with an inorganic material to provide a polyol composition having reduced moisture-absorbing properties. The particles of the inorganic material are coated on the polyol particles. It has been found that coating of hygroscopic polyol particles, for example sorbitol particles, with an inorganic material effectively reduces the ability of the polyol to absorb water from the surrounding environment. Inclusion of the polyol composition having reduced moisture-absorbing properties as a bulking agent and/or sweetener in chewing gum effectively reduces the moisture-absorbing properties of the gum as compared to chewing gum containing untreated polyol particles. Several polyols are contemplated, including, but not limited to, the group consisting of sorbitol, maltitol, xylitol, lactilol, polyglycitol, and a combination comprising at least one of the foregoing polyols. Non-limiting examples of the inorganic material include those selected from the group consisting of fumed silica, calcium silicate, talc, diatomaceous earth, pumice, kaolin, bentonite, zeolite, tricalcium phosphate, dicalcium phosphate, calcium carbonate, magnesium carbonate and a combination comprising at least one of the foregoing inorganic materials.

In some embodiments, chewing gum compositions are provided that contain the polyol composition having reduced moisture-absorbing properties. The chewing gum composition can be a multi-region chewing gum composition that includes a center fill composition and a gum region surrounding the center-fill. The center fill composition can be a liquid fill composition. In one embodiment, a chewing gum composition is provided that includes a liquid fill composition and a gum region surrounding the liquid fill composition, where the gum region includes a gum base and the polyol composition having reduced moisture-absorbing properties.

As used herein, the term "center-fill" refers to the innermost region of the compositions. The term "center-fill" does not imply symmetry of a gum piece, only that the center-fill is within another region of the gum piece. The center fill can be a liquid fill or a solid fill. In some embodiments, the center fill is a liquid fill having a syrup-like or jelly-like consistency. In some embodiments, more than one center-fill or liquid fill can be present.

As used herein, the term "liquid" refers to compositions, which will readily flow or maintain fluid properties at room temperature and pressure. The term "liquid" includes solutions, suspensions, emulsions, semi-solids, cremes, gels, etc. that not be completely liquid. The term "liquid" also includes compositions which are homogeneous or non-homogeneous mixtures of multiple liquids.

As used herein, the term "coating" is used to refer to a region of a material that at least partially surrounds the confectionery core.

As used herein, the terms "surround," "surrounding," and the like are not limited to encircling. These terms can refer to enclosing or confining on all sides, encircling or enveloping, and are not limited to symmetrical or identical thicknesses for a region in the gum product.

As used herein, the term "substantially covers" refers to coating compositions that cover more than 50% of the surface area of a confectionery core. In other embodiments, "substantially covers" refers to coverage that is more than 55%, more than 60%, more than 65%, more than 70%, more than 75%, more than 80%, more than 85%, more than 90%, more than 95%, more than 98%, and more than 99% of the surface are of a confectionery core.

As used herein, median diameter, or D₅₀, means the diameter median (i.e., 50^{th} percentile) particle size. In other words, the D₅₀ is the particle size below which 50% of the particles fall as measured by diameter. Similarly, the D₉₀ is the particle size below which 90% of the particles fall as measured by diameter. Particle sizes can be measured by any suitable methods known in the art to measure particle size by diameter. Specifically, particle size can be determined based upon sieve analysis using a standardized mesh series of sieves.

### Particulate Crunch Material

The particulate crunch material comprises particles of a first polyol coated with a crunch material coating composition. The first polyol is not particularly limited as long as the polyol particles have a low level of moisture absorbancy and the desired size of particulate crunch material can be obtained. Examples of the first polyol include hydrogenated isomaltulose, maltitol, xylitol, erythritol, or a combination comprising at least one of the foregoing polyols. In one particular embodiment, the first polyol is hydrogenated isomaltulose. Hydrogenated isomaltulose, also known as isomalt, is a disaccharide alcohol. Isomalt can be prepared by hydrogenating isomaltulose. Products of the hydrogenation can include 6-O-α-D-glucopyranosyl-D-sorbitol (1,6-GPS); 1-O-α-D-glucopyranosyl-D-sorbitol (1,1-GPS); 1-O-α-D-glucopyranosyl-D-mannitol (1,1-GPM); 6-O-α-D-glucopyranosyl-D-mannitol (1,6-GPM); and mixtures thereof. Some commercially available isomalt materials include an almost equimolar mixture of 1,6-GPS, and 1,1-GPM. Other isomalt materials can include pure 1,6-GPS; 1,1-GPS; 1,6-GP; and 1,1-GPM. Still other isomalt materials can include mixtures of 1,6-GPS; 1,1-GPS; 1,6-GPM; and 1,1-GPM at any ratio.

In one embodiment, the first polyol is hydrogenated isomaltulose having an equimolecular (50:50) mixture of the isomers 1,6-GPS and 1,1-GPM. Hydrogenated isomaltulose is an odorless, white, crystalline, non-hygroscopic substance containing about 5 percent water of crystallization.

The particle size of the first polyol can be manipulated, such as by grinding or sifting, to provide polyol particles to be coated with a crunch material coating composition. The particles of the first polyol have a D₉₀ particle size of less than about 5 mm, specifically less than about 4 mm, more specifically less than about 3.5 mm. In one embodiment, the particles of the first polyol have a D₉₀ particle size of about 0.5 to about 3.5 mm.

The amount of first polyol present in the particulate crunch material is about 50 to about 98% by weight, specifically about 60 to about 80%, and more specifically, about 65% to about 75% by weight based on the weight of the particulate crunch material.

The crunch material coating composition is coated on the surface of the first polyol. In one embodiment the crunch material coating composition comprises gum arabic. The presence of gum arabic in the crunch material coating composition influences the degree of crunchiness provided by the particulate crunch material. While at least a portion of the surface of the first polyol particles is coated with the crunch material coating composition, in other embodiments, the entire surface of the polyol particles is coated. In some embodiments, the crunch material coating composition completely surrounds or coats particles of the first polyol. In other embodiments, the crunch material coating composition only partially surrounds or coats particles of the first polyol.

In some embodiments, the crunch material coating composition is formulated as a syrup for application to the particles of the first polyol. The amount of gum arabic present in the crunch material coating composition affects the viscosity of the crunch material coating composition when in the form of a syrup, such that higher amounts of gum arabic lead to an increased viscosity. That is, when the amount of gum arabic is too high, a syrup of the crunch material coating composition becomes highly viscous thereby increasing the difficulty in applying the coating composition to particles of the first polyol. However, if the gum arabic content is too low, the number of coating steps needed to apply the gum arabic on the particles of the first polyol, in an amount sufficient to provide the desired degree of crunchiness, is increased.

The crunch material coating composition comprises about 5 to about 50% by weight of gum arabic, specifically about 10 to about 40%, more specifically, about 20% to about 30%, and even more specifically about 25% by weight based on the weight of the crunch material coating composition.

In some embodiments, the weight ratio of the first polyol particles to the gum arabic in the crunch material coating composition is about 20:1 to about 0.2:1. Specifically, in some embodiments the weight ratio of the polyol particles to the gum arabic is about 10:1 to about 0.5:1, more specifically about 4:1 to about 1:1.

The crunch material coating composition can also include a polyol. The polyol included in the crunch material coating composition is selected from the group consisting of hydrogenated isomaltulose, maltitol, xylitol, erythritol and a combination comprising at least one of the foregoing polyols. The polyol can be the same as the first polyol or can be different from the first polyol. In some embodiments, the first polyol and the polyol in the crunch material coating composition are the same. In one embodiment, the first polyol and the polyol included in the crunch material coating composition are both hydrogenated isomaltulose.

When the crunch material coating composition is in the form of a syrup, the inclusion of the polyol lowers the viscosity of the crunch material coating composition thereby increasing the ease by which the coating composition is applied to particles of the first polyol. The polyol in the crunch material coating composition is present in an amount of about 30 to about 95 % by weight based on the weight of the crunch material coating composition, specifically in an amount of about 50% to about 80%, more specifically in an amount of about 40% to about 75%, and even more specifically in an amount of about 55% to about 65% by weight. In one embodiment, the second polyol is present in an amount of about 60% by weight based on the weight of the crunch material coating composition.

Other substances other than a polyol can be used as a viscosity reducer as long as such a substance is able to effectively decrease the viscosity of the crunch material coating composition when formulated as a syrup. Such substances can be used alone or in combination with the polyol to reduce the viscosity of the crunch material coating composition.

When formulated as a syrup, the crunch material coating composition has a total solids content of up to about 50% by weight of the coating composition. When the solids content of the crunch material coating composition is higher than 50% by weight, the moisture content of the syrup decreases, resulting in a thickening of the syrup and increasing the difficulty in applying the coating composition to particles of the first polyol.

The method of making the particulate crunch material comprises coating particles of the first polyol with a syrup of the crunch material coating composition. Once the crunch material coating composition has been applied, the coated first polyol particles are allowed to dry. The crunch material coating composition can be applied to the particles of the first polyol by a variety of methods including tumbling granulation, fluidized bed granulation, spray drying granulation, or agglomeration. In one embodiment, tumbling granulation methods are used. Such methods include feeding the first polyol particles into a tumbling chamber of a tumbling-granulating coating apparatus, spraying the crunch material coating composition syrup onto the polyol particles where the materials, and simultaneously tumbling and rotating the materials within the tumbling chamber. Conditioned air can be circulated or forced into the coating chamber in order to dry the crunch material coating composition syrup on the polyol particles.

In some embodiments, the method optionally comprises the application of a fine coating powder (e.g. fine polyol powder) to the wet polyol particles to hasten the drying of the wet coating layer on the surface of the polyol particles. This method is advantageous in that agglomeration of the coated polyol particles is suppressed and the particle size distribution range of the coated particles is decreased e.g. more uniform. However, coating of the polyol particles without the use of a coating powder is also advantageous in order to increase the production efficiency by decreasing the number of process steps.

The coating steps are repeated until the desired amount of crunch material coating composition has been applied to the polyol particles, specifically, until the amount of gum arabic to provide a sufficient degree of crunchiness has been coated on the polyol particles. More specifically, the crunch material coating composition is applied until the particulate crunch material comprises gum arabic in an amount of about 0.5 to about 10%, specifically about 2 to about 8%, more specifically about 4% to about 5 % by weight based on the total weight of the particulate crunch material (dry weight). Thus, the total number of coating steps is dependent upon the amount of gum arabic present in the crunch material coating composition. When the amount of gum arabic present in the crunch material coating composition is less than about 25% by weight, the number of coating steps is increased in order to provide the desired amount of gum arabic on the polyol particles. However, when the amount of gum arabic present in the crunch material coating composition is greater than about 25% by weight, a syrup of the crunch material coating composition begins to thicken, making coating of the polyol particles more difficult without providing an improvement the in the degree of crunchiness to the particulate crunch materials. Thus, the final thickness of the coating on the polyol particles is determined by the amount of gum arabic present in the crunch material coating composition.

The final particle size of the particulate crunch material is dependent upon the particle size of the first polyol and the thickness of the crunch material coating composition. In one embodiment, the particulate crunch material has a D₉₀ particle size of about 0.5 mm to about 4 mm. Specifically, the particulate crunch material can have a particle size of less than about 4.0 mm, more specifically less than about 2 mm, even more specifically less than about 1.5 mm. In one embodiment, the particulate crunch material has a D₉₀ particle size of about 1.0 to about 1.4 mm.

The particulate crunch material optionally includes flavoring agents, dyes and/or coloring agents. The flavorants, dyes, and colorants are incorporated in the syrup of the crunch material coating composition.

### Polyol Composition

In some embodiments, a polyol composition is provided comprising particles of a polyol and particles of an inorganic material. The polyol particles included in the polyol composition are hygroscopic polyol particles. A "hygroscopic" polyol refers to a polyol that absorbs water readily from its surroundings, while a "non-hygroscopic" polyol refers to a polyol that does not readily absorb water from its surroundings. A polyol with a "low hygroscopicity" absorbs minimal water from its surroundings. The particles of the inorganic material are coated on the polyol particles resulting in a polyol composition having reduced moisture-absorbing properties as compared to a polyol that is not coated with particles of the inorganic material.

Examples of hygroscopic polyols include those selected from the group consisting of sorbitol, maltitol, xylitol, lactilol, polyglycitol and a combination comprising at least one of the foregoing polyols. In one embodiment, the hygroscopic polyol is sorbitol.

The hygroscopicity of sorbitol is considerably higher than that of the other polyols. Sorbitol has a high affinity for water and begins to absorb moisture from the environment when the relative humidity reaches about 65%. As a result, the inclusion of sorbitol in chewing gum formulations leads to a poor surface finish and an overall stickiness in high relative humidity conditions. Further, liquid-fill chewing gum compositions including sorbitol also possess the unfavorable property of absorbing the liquid from the liquid-fill composition, thus rendering the liquid fill gum with a loss of liquidity.

It has been found that coating of hygroscopic polyol particles with an inorganic material effectively reduces the ability of the polyol to absorb water from the environment. It has also been found that coating of hygroscopic polyol particles with an inorganic material results in reduced lumping of finer grades of polyol. It has even further been found that inclusion of the polyol composition having reduced moisture-absorbing properties in liquid center-fill chewing gums effectively decreases the loss of liquidity of center-fill components from the liquid-center filling.

In some embodiments, a polyol composition is provided comprising particles of a polyol selected from the group consisting of sorbitol, maltitol, xylitol, lactilol, polyglycitol and a combination comprising at least one of the foregoing polyols, and particles of an inorganic material, wherein the particles of the inorganic material are coated on the polyol particles. The resulting polyol composition has reduced moisture-absorbing properties

The particles of the inorganic material have a D₅₀ particle size of less than 50 µm. Specifically, the particles of the inorganic material have a D₅₀ particle size of less than 30 µm, specifically less than 10 µm, more specifically less than 1 µm, even more specifically less than 0.5 µm, or even further more specifically less than 0.1 µm.

The inorganic material is selected from the group consisting of fumed silica, calcium silicate, talc, diatomaceous earth, pumice, kaolin, bentonite, zeolite tricalcium phosphate, calcium carbonate, magnesium carbonate and a combination comprising at least one of the foregoing inorganic materials, but is not limited thereto.

In some embodiments, the weight ratio of the particles of polyol to the particles of inorganic material in the polyol composition is about 10:1 to about 100:1. More specifically, the weight ratio of the particles of polyol to the particles of inorganic material is about 24:1 to about 99:1. In one embodiment, the inorganic material is present in an amount of about 0.2 to about 4% by weight based on the total weight of the particles of polyol and the particles of inorganic material present in the polyol composition.

The inorganic material is coated at least partially on the surface of the polyol particles. In some embodiments, the inorganic material completely surrounds or coats particles of the polyol. In other embodiments, the inorganic material only partially surrounds or coats particles of the polyol. In yet another embodiment, the inorganic material substantially covers the surface of the polyol particles. Optionally, a binding liquid such as alcohol or water is used to wet the surface of the polyol particles prior to application of the inorganic material.

Following coating of the polyol particles with particles of the inorganic material, the particles of the polyol composition have a D₅₀ particle size of less than 500 µm. Specifically, the particles of the polyol composition have a D₅₀ particle size of less than 250 µm , more specifically less than 100 µm, even more specifically less than 50 µm, and even more specifically less than 30 µm.

The method of making the polyol composition includes combining the particles of the polyol with particles of the inorganic material and mixing the particles together in an apparatus typically used to blend powders, for example, a ribbon blender or a V blender. In one embodiment, the polyol particles are added to a ribbon blender followed by the gradual addition of the inorganic material over a defined period of time. The particles are then mixed until they are well blended.

Without being bound by theory, it is thought that the coating of particles of a hygroscopic polyol with particles of an inorganic material effectively masks the hygroscopic nature of the polyol thereby reducing the ability of the polyol particles themselves to absorb moisture from a liquid center fill, or alternatively, from the environment. Thus, inclusion of the polyol composition having reduced moisture-absorbing properties as a bulking agent and/or sweetener in a chewing gum composition effectively reduces the surface stickiness and enhances the surface finish of the gum as compared to a chewing gum containing untreated polyol particles. Further, in multi-region chewing gums including a liquid center-fill, the loss of liquidity in the liquid fill composition can be effectively reduced using the polyol composition having reduced moisture-absorbing properties.

### Chewing Gum Compositions

The chewing gum compositions disclosed herein can be varied to suit the type of gum produced i.e. chewing or bubble gum. As used herein, the terms "bubble gum" and "chewing gum" are used interchangeably and are both meant to include any gum composition.

The chewing gum compositions can be coated or uncoated, and be in the form of slabs, sticks, pellets, balls, and the like. The composition of the different forms of the chewing gum compositions will be similar but can vary with regard to the ratio of the ingredients. For example, coated chewing gum compositions can contain a lower percentage of softeners. Pellets and balls have a chewing gum core, which has been coated with either a sugar solution or a sugarless solution to create the hard shell. Slabs and sticks are usually formulated to be softer in texture than the chewing gum core. In some cases, an hydroxy fatty acid salt or other surfactant actives have a softening effect on the gum base.

Center-filled gum is another suitable chewing gum form. The chewing gum portion has a similar composition and mode of manufacture to that described above. However, the center-fill is typically an aqueous liquid or gel, which is injected into the center of the gum during processing. The polyol composition having reduced moisture-absorbing properties and/or particulate crunch material could optionally be incorporated into the center-fill during manufacture of the fill, incorporated directly or into the chewing gum portion of the total gum composition or both. The center-filled gum can also be optionally coated and can be prepared in various forms, such as in the form of a lollipop.

The chewing gum composition comprises a gum base, bulk sweeteners, high intensity sweeteners, flavorants, coloring agents, sensates, and any other optional additives, including oral care agents, throat-soothing agents, spices, tooth-whitening agents, breath-freshening agents, vitamins, minerals, caffeine, drugs (e.g., medications, herbs, and nutritional supplements), flavor modulators or potentiators, mouth moisteners, flavor enhancing composition, antioxidants, mineral adjuvants, bulking agents, acidulants, buffering agents, thickeners, preservatives, and the like. A combination comprising at least one of the foregoing additives are often used.

The gum base employed in the chewing gum compositions can vary depending upon factors such as the type of base desired, the consistency of gum desired and the other components used in the composition to make the final chewing gum product. The gum base can be any water-insoluble gum base known in the art, and includes those gum bases utilized for chewing gums and bubble gums. Illustrative examples of suitable polymers in gum bases include both natural and synthetic elastomers and rubbers. In this regard, polymers which are suitable as gum bases include, without limitation, elastomers of vegetable origin such as chicle, natural rubber, crown gum, nispero, rosidinha, jelutong, perillo, niger gutta, tunu, balata, guttapercha, lechi capsi, sorva, gutta kay, mixtures thereof, and the like. Synthetic elastomers such as butadiene-styrene copolymers, polyisobutylene, isobutylene-isoprene copolymers, polyethylene, mixtures thereof, and the like, are also useful. Suitable gum bases can also include a non-toxic vinyl polymer, such as polyvinyl acetate and its partial hydrolysate, polyvinyl alcohol, and mixtures thereof. When utilized, the molecular weight of the vinyl polymer can range from about 2,000 to about 94,000 Daltons (Da).

The amount of gum base employed will vary greatly depending upon various factors such as the type of base used, the consistency of the gum desired, and the other components used in the composition to make the final chewing gum product. In general, the gum base will be present in amounts of about 5 % to about 50 % by weight of the final chewing gum composition, or in amounts of about 15 % to about 40 %, and more specifically in amounts of about 20 % to about 35 % by weight of the final chewing gum product.

The gum base can also include plasticizers or softeners such as lanolin, palmitic acid, oleic acid, stearic acid, sodium stearate, potassium stearate, glyceryl triacetate, glyceryl lecithin, glyceryl monostearate, propylene glycol monostearate, acetylated monoglyceride, glycerine, mixtures thereof, and the like. Waxes, for example, natural and synthetic waxes, hydrogenated vegetable oils, organic waxes such as polyurethane waxes, polyethylene waxes, paraffin waxes, microcrystalline waxes, fatty waxes, sorbitan monostearate, tallow, polypropylene glycol, mixtures thereof, and the like, can also be incorporated into the gum base. Such materials are incorporated into the gum base to provide a variety of desirable textures and consistency properties. Because of the low molecular weight of these ingredients, they are able to penetrate the fundamental structure of the gum base making it plastic and less viscous. These additional materials are generally employed in amounts up to about 18%, specifically in amounts from about 5% to about 18%, and more specifically in amounts from about 10% to about 14%, by weight of the gum base.

In one embodiment, the softening agent is glycerin, such as the commercially available United States Pharmacopeia (USP) grade. Glycerin is a syrupy liquid with a sweet warm taste and has a sweetness of about 60% of cane sugar.

The gum base can include effective amounts of bulking agents such as mineral adjuvants, which can serve as fillers and textural agents. Examples of such mineral adjuvants include calcium carbonate, magnesium carbonate, alumina, aluminum hydroxide, aluminum silicate, talc, tricalcium phosphate, dicalcium phosphate and the like, as well as mixtures thereof. These fillers or adjuvants can be used in the gum base in various amounts. Specifically the amount of filler, when used, can be present in an amount of about 0 % to about 60 % by weight of the gum base, and more specifically from about 20 % to about 30 % by weight of the gum base.

Additional bulking agents (carriers, extenders) suitable for use include sweetening agents selected from monosaccharides, disaccharides, polysaccharides, sugar alcohols; polydextrose; maltodextrins; minerals, such as calcium carbonate, talc, titanium dioxide, dicalcium phosphate, or a combination comprising at least one of the foregoing sweetening agents. Bulking agents can be used in amounts up to about 90 % by weight of the final gum composition, specifically about 40 % to about 70 %, and more specifically about 50 % to about 65 % by weight of the gum composition.

Effective amounts of a variety of traditional ingredients further can be included in the gum base, such as coloring agents, antioxidants, preservatives, and the like. For example, titanium dioxide and other dyes suitable for food, drug and cosmetic applications, known as F.D. & C. dyes, can be utilized. An anti-oxidant such as butylated hydroxytoluene (BHT), butylated hydroxyanisole (BHA), propyl gallate, and mixtures thereof, can also be included. Other conventional chewing gum additives known to one having ordinary skill in the chewing gum art can also be used in the chewing gum base.

The chewing gum composition containing the gum base can include effective amounts of conventional additives selected from non-sucrose sweetening agents (sweeteners), plasticizers, softeners, emulsifiers, waxes, fillers, bulking agents (carriers, extenders), mineral adjuvants, flavoring agents (flavors, flavorings), coloring-agents (colorants, colorings), antioxidants, acidulants, thickeners, and the like, or a combination comprising at least one of the foregoing additives. Some of these additives can serve more than one purpose. For example, in sugarless chewing gum compositions, a sweetener, such as sorbitol or other sugar alcohol or mixtures thereof, is also able to function as a bulking agent.

Sweetening agents include sugar sweeteners, sugarless sweeteners, high intensity sweeteners, or a combination comprising at least one of the foregoing sweetening agents.

Sugar sweeteners generally include saccharides. Suitable sugar sweeteners include mono-saccharides, di-saccharides and poly-saccharides such as but not limited to, sucrose (sugar), dextrose, maltose, dextrin, xylose, ribose, glucose, mannose, galactose, fructose (levulose), lactose, invert sugar, fructo oligo saccharide syrups, partially hydrolyzed starch, corn syrup solids, such as high fructose com syrup, or a combination comprising at least one of the foregoing sweeteners.

Suitable sugarless sweetening agents include sugar alcohols (or polyols) such as, but not limited to, sorbitol, xylitol, mannitol, galactitol, maltitol, hydrogenated isomaltulose (isomalt), lactitol, erythritol, hydrogenated starch hydrolysate, stevia or a combination comprising at least one of the foregoing sugarless sweetening agents.

The high intensity sweetener is selected from a wide range of materials, including water-soluble sweeteners, water-soluble artificial sweeteners, water-soluble sweeteners derived from naturally occurring water-soluble sweeteners, dipeptide based sweeteners, or a combination comprising at least one of the foregoing high intensity sweeteners.

The plasticizers, softening agents, mineral adjuvants, coloring agents, waxes and antioxidants discussed above, as being suitable for use in the gum base, can also be used in the gum composition. Examples of other conventional additives which can be used include emulsifiers, such as lecithin and glyceryl monostearate, thickeners, used alone or in combination with other softeners, such as methyl cellulose, alginates, carrageenan, xanthan gum, gelatin, carob, tragacanth, locust bean, and carboxy methyl cellulose, acidulants such as malic acid, adipic acid, citric acid, tartaric acid, fumaric acid, and mixtures thereof, and fillers, such as those discussed above under the category of mineral adjuvants. The fillers, when used, can be utilized in an amount up to about 60%, by weight of the gum composition.

The flavoring agents include those flavors known to the skilled artisan, such as natural and artificial flavors. These flavorings can be chosen from synthetic flavor oils and flavoring aromatics and/or oils, oleoresins and extracts derived from plants, leaves, flowers, fruits, and so forth, or a combination comprising at least one of the foregoing flavorings. Non-limiting representative flavor oils include spearmint oil, cinnamon oil, oil of wintergreen (methyl salicylate), peppermint oil, clove oil, bay oil, anise oil, eucalyptus oil, thyme oil, cedar leaf oil, oil of nutmeg, allspice, oil of sage, mace, oil of bitter almonds, and cassia oil. Also, useful flavorings are artificial, natural and synthetic fruit flavors such as vanilla, and citrus oils including lemon, orange, lime, grapefruit, and fruit essences including apple, pear, peach, grape, strawberry, raspberry, cherry, plum, pineapple, apricot and so forth. These flavoring agents can be used in liquid or solid form and can be used individually or in admixture. Commonly used flavors include mints such as peppermint, menthol, artificial vanilla, cinnamon derivatives, and various fruit flavors, whether employed individually or in admixture.

Other useful flavorings include aldehydes and esters such as cinnamyl acetate, cinnamaldehyde, citral diethylacetal, dihydrocarvyl acetate, eugenyl formate, p-methylamisol, and so forth can be used. Generally any flavoring or food additive such as those described in Chemicals Used in Food Processing, publication 1274, pages 63-258, by the National Academy of Sciences, can be used.

The flavoring agents can be used in many distinct physical forms well known in the art to provide an initial burst of flavor and/or a prolonged sensation of flavor. Without being limited thereto, such physical forms include free forms, such as spray dried, powdered, and beaded forms, and encapsulated forms, or a combination comprising at least one of the foregoing physical forms.

The flavoring agents are generally present in amounts from about 0.1 to about 12%, and more specifically from about 0.1 to about 10% and even more specifically, from about 0.5% to about 5% weight percent, by weight of the chewing gum composition.

The coloring agents useful in the present compositions are used in amounts effective to produce the desired color. These coloring agents include pigments, which can be incorporated in amounts up to about 6%, by weight of the gum composition. In one embodiment, the pigment titanium dioxide, is incorporated in amounts up to about 2%, and specifically less than about 1%, by weight of the gum composition. The colorants can also include natural food colors and dyes suitable for food, drug and cosmetic applications. These colorants are known as F.D.&C. dyes and lakes. The materials acceptable for the foregoing uses are specifically water-soluble. A full recitation of all F.D.&C. colorants and their corresponding chemical structures can be found in the Kirk-Othmer Encyclopedia of Chemical Technology, 3rd Edition, in volume 5 at pages 857-885, which text is incorporated herein by reference.

Oral care agents that can be included in the chewing gum composition include breath fresheners, tooth whiteners, antimicrobial agents, tooth mineralizers, tooth decay inhibitors, topical anesthetics, mucoprotectants, stain removers, oral cleaning, bleaching agents, desensitizing agents, dental remineralization agents, antibacterial agents, anticaries agents, plaque acid buffering agents, surfactants and anticalculus agents, or a combination comprising at least one of the foregoing oral care agents. Non-limiting examples of such ingredients can include, hydrolytic agents including proteolytic enzymes, abrasives such as hydrated silica, calcium carbonate, sodium bicarbonate and alumina, other active stain-removing components such as surface-active agents, including anionic surfactants such as sodium stearate, sodium palminate, sulfated butyl oleate, sodium oleate, salts of fumaric acid, glycerol, hydroxylated lecithin, sodium lauryl sulfate and chelators such as polyphosphates, which are typically employed as tartar control ingredients. Oral care ingredients can also include tetrasodium pyrophosphate and sodium tri-polyphosphate, sodium bicarbonate, sodium acid pyrophosphate, sodium tripolyphosphate, xylitol, sodium hexametaphosphate.

In addition, suitable oral care agents include peroxides such as carbamide peroxide, calcium peroxide, magnesium peroxide, sodium peroxide, hydrogen peroxide, and peroxydiphospate. In some embodiments, potassium nitrate and potassium citrate are included. Other examples can include casein glycomacropeptide, calcium casein peptone-calcium phosphate, casein phosphopeptides, casein phosphopeptide-amorphous calcium phosphate (CPP-ACP), and amorphous calcium phosphate. Still other examples can include papaine, krillase, pepsin, trypsin, lysozyme, dextranase, mutanase, glycoamylase, amylase, glucose oxidase, or a combination comprising at least one of the foregoing .

Suitable oral care agents include surfactants which achieve increased prophylactic action and to render the oral care ingredients more cosmetically acceptable. Surfactants used as oral care agents can include detersive materials which impart to the composition detersive and foaming properties. Suitable surfactants include sodium stearate, sodium ricinoleate, sodium lauryl sulfate, water-soluble salts of higher fatty acid monoglyceride monosulfates, such as the sodium salt of the monosulfated monoglyceride of hydgrogenated coconut oil fatty acids, higher alkyl sulfates such as sodium lauryl sulfate, alkyl aryl sulfonates such as sodium dodecyl benzene sulfonate, higher alkyl sulfoacetates, sodium lauryl sulfoacetate, higher fatty acid esters of 1,2-dihydroxy propane sulfonate, and the substantially saturated higher aliphatic acyl amides of lower aliphatic amino carboxylic acid compounds, such as those having 12 to 16 carbons in the fatty acid, alkyl or acyl radicals, and the like. Examples of the last mentioned amides are N-lauroyl sarcosine, and the sodium, potassium, and ethanolamine salts of N-lauroyl, N-myristoyl, or N-palmitoyl sarcosine.

In addition to surfactants, oral care ingredients can include antibacterial agents comprising triclosan, chlorhexidine, zinc citrate, silver nitrate, copper, limonene, and cetyl pyridinium chloride.

Anticaries agents can include fluoride ions, fluorine-providing components (e.g., inorganic fluoride salts), soluble alkali metal salts (e.g., sodium fluoride, potassium fluoride, sodium fluorosilicate, ammonium fluorosilicate, potassium fluoride, sodium monofluorophosphate), and tin fluorides, (e.g., such as stannous fluoride and stannous chloride, potassium stannous fluoride (SnF₂ -KF), sodium hexafluorostannate, stannous chlorofluoride).

Further examples are included in the following U.S. Patents which are incorporated in their entirety herein by reference: U.S. Patent Nos. 5,227,154 to Reynolds, 5,378,131 to Greenberg and 6,685,916 to Holme et al.

The apparatus useful for manufacturing the chewing gum comprises mixing and heating apparatus well known in the chewing gum manufacturing arts, and therefore the selection of the specific apparatus will be apparent to the artisan. In preparing a chewing gum, a composition is made by admixing the gum base with the particulate crunch material or polyol composition having reduced moisture-absorbing properties described herein and the other ingredients of the final desired composition. Other ingredients will usually be incorporated into the composition as dictated by the nature of the desired composition as well known by those having ordinary skill in the art. The ultimate chewing gum compositions are readily prepared using methods generally known in the food technology and pharmaceutical arts.

For example, a gum base is heated to a temperature sufficiently high to soften the base without adversely affecting the physical and chemical make up of the base. The optimal temperatures utilized vary depending upon the composition of the gum base used, but such temperatures are readily determined by those skilled in the art without undue experimentation. The gum base is conventionally melted at temperatures that range from about 60° C. to about 120° C. for a period of time sufficient to render the base molten. For example, the gum base can be heated under those conditions for a period of about thirty minutes just prior to being admixed incrementally with the remaining ingredients of the gum such as plasticizers, softeners, bulking agents, sweeteners, the particulate crunch material, the polyol composition having reduced moisture-absorbing properties and/or fillers, coloring agents and flavoring agents to plasticize the blend as well as to modulate the hardness, viscoelasticity and formability of the base. Mixing is continued until a uniform mixture of gum composition is obtained. Thereafter the gum composition mixture can be formed into desirable chewing gum shapes.

The multi-component, liquid-fill gum compositions described herein can be formed by any technique known in the art which includes the method described by U.S. Patent No. 6,280,780 to Degady et al. ("Degady"), which is herein incorporated by reference in its entirety. Degady describes an apparatus and method for forming center-filled gum pellets. The method includes first extruding a liquid-filled rope of a chewing gum layer and passing the rope through a sizing mechanism including a series of pairs of pulley-shaped roller members. The roller members "size" the rope or strand of gum material such that it leaves the series of rollers with the desired size and shape for entering a tablet-forming mechanism.

The rope is then led into a tablet-forming mechanism including a pair of rotating chain die members, which are endless chain mechanisms and both rotate at the same speed by a motor and gear mechanism. Each of the chain mechanisms includes a plurality of open curved die groove members which mate and form die cavities in which the pieces of gum material (pellets or tablets) are formed. While Degady is limited to the formation of pellet or tablet shaped pieces, the gum pieces can be of other shapes as described above. The shape of the die groove members can be altered to provide any desired shape.

The chewing gum can optionally be passed through a cooling tunnel either before entering the tablet-forming mechanism, after exiting the tablet-forming mechanism or both. Cooling of the rope prior to entering the tablet-forming mechanism can be beneficial to prevent rebound of the individual pieces and thus an increase in productivity.

The cooled pieces of gum material are then fed into a storage container for conditioning and further processing. At this point, the cooled pieces of gum material might also be fed directly into a coating tunnel mechanism, such as a rotating tunnel mechanism.

In some embodiments, individual gum pieces are coated with an aqueous outer coating composition using a conventional sugar or sugarless coating process in order to form a hard exterior shell on the chewing gum material. Such coatings are applied by any method known in the art and can be hard or crunchy. In general, the coating is applied in numerous thin layers of material in order to form an appropriate uniform coated and finished quality surface on the gum products. The hard coating material, which can include sorbitol, maltitol, xylitol, isomalt, and other crystallizable polyols, including those described herein, and optionally flavoring, is sprayed onto the pellets of gum material as they pass through a coating mechanism or a coating tunnel and are tumbled and rotated therein. In addition, conditioned air is circulated or forced into the coating tunnel or mechanism in order to dry each of the successive coating layers on the formed products.

The outer coating, if present, can include several thin, opaque layers, such that the chewing gum composition is not visible through the coating itself, which can optionally be covered with a further one or more transparent layers for aesthetic, textural and protective purposes. The outer coating can also contain small amounts of water and gum arabic. The outer coating can be further coated with wax. The outer coating can be applied in a conventional manner by successive applications of a coating solution, with drying in between each coat. As the outer coating dries it usually becomes opaque and is usually white, though other colorants can be added. Flavorants can also be added to the outer coating composition to yield unique product characteristics. A polyol coating can be further coated with wax. The coating can further include colored flakes or speckles.

Various other coating compositions and methods of making are also contemplated including but not limited to soft panning, dual or multiple extrusion, lamination, etc. Thus, in some embodiments, the coating can be amorphous or crystalline and the resulting texture can be hard, crunchy, crispy, soft, or chewy.

### Crunchy Chewing Gum

Disclosed herein are crunchy chewing gum compositions providing for a long lasting crunch while being chewed and having a commercially acceptable storage time. In some embodiments, the crunchy chewing gum has a gum core comprising a gum base and a particulate crunch material. The particulate crunch material is composed of particles of a first polyol coated with a crunch material coating composition. In one embodiment, the crunch material coating composition comprises gum arabic. In another embodiment, the weight ratio of the first polyol particles to the gum arabic is about 4:1 to about 1:1

The crunchy chewing gum can be any type of gum, i.e. chewing gum or bubble gum, and can be provided in any of the traditional gum forms, i.e. sticks, blocks, hard coated pellets, and the like. In one embodiment, the crunchy chewing gum is a pellet gum.

The gum core includes a gum base, and can further include any component known in the chewing gum art as previously described herein. In preparing the crunchy chewing gum, a gum core is made by admixing the gum base with the particulate crunch material and the other ingredients of the final desired composition. The particulate crunch material is thus incorporated internally within the chewing gum formulation e.g. within the gum core. In accordance with the specific embodiments, the particulate crunch material is internal such that the crunch is not derived from the coating surrounding hard-coated gum products.

The particulate crunch material is employed in a size range which provides for a crunch while chewing. The particle size of the particulate crunch material is dependent upon the particle size of the first polyol and the thickness of the crunch material coating composition. The particulate crunch material has a D₉₀ particle size of about 0.5 mm to about 4 mm. Specifically, the particulate crunch material can have a particle size of less than about 4.0 mm, more specifically less than about 2 mm, even more specifically less than about 1.5 mm. In one embodiment, the particulate crunch material has a D₉₀ particle size of about 1.0 to about 1.4 mm.

The amount of particulate crunch material used in the finished chewing gum product depends upon several factors including the final particle size distribution obtained in preparing the crunch product and the effect desired i.e. the desired amount of "crunchiness". In some embodiments, the particulate crunch material is added to the gum core in an amount of about 10% to about 50% by weight, specifically about 20% to about 40%, more specifically about 25% to about 35%. In one embodiment, the particulate crunch material is added to the gum core in an amount of 30% by weight, based on the weight of the chewing gum core.

As previously described, the particulate crunch material can optionally contain dyes and/or coloring agents to provide a colored appearance to the particulate crunch material. Distribution of particulate crunch material containing a coloring agent or dye in the gum core of the chewing gum composition can thus provide a "speckled" appearance to the chewing gum core. In some embodiments, a crunchy chewing gum is provided that comprises a gum core comprising a colored particulate crunch material, and wherein the crunch chewing gum has a speckled appearance.

The gum core can also include an untreated polyol. The untreated polyol can be present in the gum core in an amount of about 1% to about 50%, specifically in an amount of about 5% to about 30%, more specifically in an amount of about 10 to about 20% by weight based on the weight of the gum core.

In order to further enhance and extend the crunchiness of the chewing gum composition, the crunchy chewing gum composition can further include a water-insoluble particulate material.

The water-insoluble particulate material can be an inorganic particulate material or an organic particulate material.

In one embodiment, the water-insoluble particulate material is an inorganic particulate material. Examples of inorganic particulate materials include those selected from the group consisting of vitreous silica, pumice, diatomaceous earth, kaolin, bentonite, zeolite, tricalcium phosphate, dicalcium phosphate, calcium carbonate, magnesium carbonate and combinations comprising at least one of the foregoing inorganic particulate materials, but is not limited thereto. In one embodiment the water-insoluble particulate material is vitreous silica. Vitreous silica is composed primarily of amorphous silica (silicon dioxide), specifically about 75%, in combination with minor amounts of other metal oxides such as aluminum oxide, potassium oxide, ferrous oxide, calcium oxide, magnesium oxide, and titanium oxide.

In another embodiment, the water-insoluble particulate material is a water-insoluble organic particulate material. Examples of water-insoluble organic particulate materials include those selected from the group consisting of glycerol monostearate, calcium stearate, hydrogenated vegetable fat (in organic solvent), cellulose powder, microcrystalline cellulose, hydrocolloids, ethylcellulose, methylcellulose, hydroxypropylmethylcellulose), starch, dextrin, polyvinyl pyrrolidone (PVP), polyvinyl acetyl phthalate (PVAP), and combinations comprising at least one of the foregoing organic particulate materials.

The water-insoluble particulate material has a small particle size. Specifically, the water-insoluble particulate material has a D₅₀ particle size of about 5 µm to about 60 µm, more specifically about 8 to about 30 µm, and even more specifically about 10 to about 15 µm. In one embodiment, the water-insoluble particulate material has a D₅₀ particle size of about 12µm.

When included in a chewing gum composition, the water-insoluble particulate material exhibits a subtle abrasive property that is perceptible by the user. In particular, mastication of a chewing gum composition containing the water-insoluble particulate material provides the user with the perception that the chewing gum composition contains "micro-scrubbers." The water-insoluble particulate material thereby imparts a sensory effect to the chewing gum composition as the gum is being chewed. Further, because the water-insoluble particulate material is not soluble in water, it is not solubilized upon exposure to saliva during mastication, and thus the sensory effect of the water-insoluble particulate material is maintained over the duration of the chew

The water-insoluble particulate material is included in the gum core of the crunchy chewing gum. The water-insoluble particulate material is generally present in an amount of about 0.01 to about 10%, specifically about 0.05 to about 5%, more specifically about 0.1 to about 2 %, or even more specifically about 0.5 to about 1.5% by weight based on the weight of the gum core. In one embodiment, the water-insoluble particulate material is present in an amount of about 1% by weight based on the weight of the chewing gum core.

In some embodiments, the crunchy chewing gum includes a crunchy outer coating on the chewing gum core. Such coated compositions contain the crunchy chewing gum composition as the center or gum core portion of the chewing gum product and a crunchy out coating surrounding the gum core portion. The crunchy outer coating comprises a polyol selected from maltitol, hydrogenated isomaltulose, erythritol, xylitol, or a combination comprising at least one of the foregoing polyols.

The outer coating composition can be present in an amount of about 2 to about 60%, specifically about 25% to about 40% by weight of the total gum piece, and more specifically about 30% by weight of the gum piece.

In some embodiments, the coated crunchy chewing gum comprises about 60% to about 75% by weight of a gum core comprising the particulate crunch material, and about 25% to about 40% by weight of an outer coating on the chewing gum core. The coated crunchy chewing gum can be prepared using standard techniques and equipment known to those skilled in the art, as previously described.

### Multi-component chewing gum

Disclosed herein are multi-component chewing gums that contain the polyol composition having reduced moisture-absorbing properties. The multi-component chewing gum composition includes at least one liquid fill composition and a gum region adjacent to and surrounding the liquid fill composition. In one embodiment, a chewing gum composition is provided comprising a liquid-fill composition and a gum region surrounding the liquid fill composition, the gum region comprising a gum base and a polyol composition having reduced moisture-absorbing properties. The polyol composition having reduced moisture-absorbing properties comprises particles of a hygroscopic polyol and particles of an inorganic material wherein particles of the hygroscopic polyol are coated with particles of the inorganic material.

It has been found that inclusion of the polyol composition having reduced moisture-absorbing properties in the gum region of a multi-component chewing gum composition effectively decreases the loss of liquidity from the liquid fill composition. Without being bound by theory, it is thought that by coating particles of a hygroscopic polyol with particles of an inorganic material, the hygroscopic nature of the polyol is effectively masked, and the ability of the polyol particles to absorb moisture from the liquid center fill, or alternatively from the environment is thereby reduced. Thus, inclusion of the polyol composition having reduced moisture-absorbing properties as a bulking agent and/or sweetener in a chewing gum composition effectively reduces the surface stickiness and enhances the surface finish of the gum as compared to a chewing gum containing untreated polyol particles. Further, in chewing gum composition including a liquid fill composition, the loss of liquidity in the liquid fill composition can be effectively reduced using the polyol composition having reduced moisture-absorbing properties.

The gum region of the multi-component chewing gum includes a gum base, and can further include any component known in the chewing gum art as previously described herein. The gum region in a multi-component chewing gum provides a liquid barrier to surround and prevent the liquid-fill from migration and premature release. One or more cavities can be present in the gum region to house the liquid fill composition. The shape of the cavity is determined by the final configuration of the chewing gum piece. The gum region comprises up to about 40 to about 97% by weight of the total chewing gum composition, more specifically from about 55% to about 65% by weight of the chewing gum piece, even more specifically about 62%.

In one embodiment, the polyol composition having reduced moisture-absorbing properties is included in the gum region but is not limited thereto. The gum region is prepared by admixing the gum base with the polyol composition having reduced moisture-absorbing properties and the other ingredients of the final desired composition. In another embodiment, the polyol composition having reduced moisture-absorbing properties is present in an amount greater than 10 % by weight based on the total weight of the chewing gum composition. Specifically, the polyol composition having reduced moisture-absorbing properties is present in the gum region in an amount of about 10%, 20%, 30%, 40%, 50%, 60%, 70%, or up to 80% by weight based on the weight of the gum region.

The gum region can also include an untreated polyol which includes any polyol known in the art such as those selected from maltitol, sorbitol, erythritol, xylitol, mannitol, isomalt, lactitol or a combination comprising at least one of the foregoing polyols. Lycasin which is a hydrogenated starch hydrolysate including sorbitol and maltitol, can also be used. The untreated polyol is present in the gum region in an amount of about 5%, 10%, 20%, 30%, 40%, or up to 50% by weight of said gum region.

The liquid-fill composition can include any components known in the art for incorporation in a center-fill composition. This can include glycerine in addition to one or more untreated polyols. The untreated polyols that can be present include those selected from the group consisting of maltitol, sorbitol, xylitol, and a combination comprising at least one of the foregoing polyols.

The liquid-fill composition can further contain those traditional ingredients well known in the chewing gum arts, such as flavoring agents, sweetening agents, and the like, and mixtures thereof, as described above. In addition to traditional chewing gum additives, the liquid-fill composition can also contain pharmaceutical additives such as medicaments, breath fresheners, vitamins, minerals, caffeine, fruit juices, and the like, and mixtures thereof. The chewing gum additives and pharmaceutical agents can be used in many distinct physical forms well known in the art to provide an initial burst of sweetness and flavor and/or therapeutic activity or a prolonged sensation of sweetness and flavor and/or therapeutic activity. Without being limited thereto, such physical forms include free forms, such as spray dried, powdered, and beaded forms, and encapsulated forms, and mixtures thereof.

The liquid-fill composition also can include a natural or synthetic gum such as carboxymethylcellulose, pectin, propylene glycol aginate, agar and gum tragacanth. These compositions serve to increase viscosity by reducing the amount of free water in the composition. Xanthan gum may also be used to increase the viscosity of the center-fill composition. Increasing viscosity of the liquid also helps prevent the liquid from leaking through the gum piece. The viscosity of the liquid-fill ranges from about 300 cp to about 6,000 cp at 25° C. In liquid-fill compositions which have a greater water activity than the surrounding gum region, the viscosity ranges from about 3,000 cp to about 6,000 cp at 25° C.

The liquid-fill composition comprises up to about 20% by weight of the chewing gum composition. Specifically, the liquid-fill is present in an amount up to about 10% by weight of the total chewing gum composition. More specifically, the liquid-fill is approximately 8% by weight of the total chewing gum composition.

The gum region can have a total moisture content of less than 1% by weight up to about 5% by weight of the gum region, with a free moisture content of about 0.2 to about 0.55% by weight. The liquid-fill composition can have total moisture content including free and bound moisture of up to about 35% by weight of said center-fill.

As discussed previously, the polyol composition exhibits decreased moisture absorption as compared to untreated hygroscopic polyols. The inclusion of the polyol composition having reduced moisture-absorbing properties in a chewing gum having a liquid fill composition contained therein, is able to decrease the migration of liquid-fill components (including hydrophobic and hydrophilic components) from the liquid-fill composition. In some embodiments, after a defined period of time (e.g. up to 3 months) the chewing gum composition comprising the polyol composition exhibits a reduced loss of the liquid fill composition as compared to chewing gum compositions that contain an untreated hygroscopic polyol.

The multicomponent chewing gum composition can further include an outer coating surrounding the gum region. The outer coating, when included in the multi-region chewing gum compositions, can be applied by any method known in the art including the methods previously described. The outer coating composition can be present in an amount of about 2 to about 60%, specifically about 25% to about 40% by weight of the total gum piece, and more specifically about 30% by weight of the gum piece.

The foregoing and other embodiments are further illustrated by the following examples, which are not intended to limit the effective scope of the claims. All parts and percentages in the examples and throughout the specification and claims are by weight of the final composition unless otherwise specified.

### EXAMPLES

### Example 1

### Preparation of Particulate Crunch Material

Particulate crunch material was prepared using hydrogenated isomaltulose (isomalt) as the core polyol particle. The hydrogenated isomaltulose material (Isomaltidex 16500; Cargill) is a 50:50 blend of 6-O-alpha-D-glucopyranosyl-D-sorbitol (1,6-GPS) and 1-O-alpha-D-glucopyranosyl-D-mannitol dihydrate (1,1-GPM). The isomalt material has a D₉₀ particle size of 0.5 mm to 3.5 mm.

The crunch material coating composition was prepared as a syrup by first combining gum arabic, crystalline isomalt and water, and heating the mixture. The ratio of crystalline isomalt to gum arabic was 60:40 based upon dry weight of the crunch material coating composition.

Coating of the hydrogenated isomaltulose (isomalt) particles was performed using tumbling granulation methods. The polyol particles were fed into a tumbling chamber of a tumbling-granulating coating apparatus. The crunch material coating composition was sprayed onto the isomalt particles in the tumbling chamber and the materials were simultaneously tumbled and rotated within the chamber. Conditioned air was circulated or forced into the coating chamber in order to dry the coating layer on the isomalt particles. A powdered polyol was further added to enhance drying of the coated particles as well as to reduce the agglomeration of the coated particles. In this example, the polyol isomalt was used, however other powdered polyols might also be used. It should be noted that the inclusion of a powdered polyol in the drying step is not required to produce the particulate crunch material.

The coating steps were repeated a number of times in order to build up a coating on the isomalt particles. The weight ratio of the isomalt particles to the dry weight of the crunch material coating composition used to form the particulate crunch material was 70:30. The total amount of gum arabic present in the prepared particulate crunch material was 4-5% by weight, based on the weight of the particulate crunch material.

### Example 2

### Preparation of Crunchy Chewing Gum

Chewing gum samples in the form of pellets were prepared by conventional methods employing the gum formulation shown in Table 1. The particulate crunch material prepared as described in Example 1 was included in the chewing gum composition.

**Table 1: Crunchy Chewing Gum containing particulate crunch material**

| Component | % by weight |
|---|---|
| Gum base | 36.0 |
| Maltitol MR-100 (powdered; Ueno 60 me) | 8.97 |
| Isomalt (untreated) | 10 |
| Glycerin | 2.5 |
| MCT [medium chain triglycerides] | 1.0 |
| Lycasin | 1.0 |
| Lecithin | 0.16 |
| Flavors | 9.5 |
| Intense Sweeteners | 0.6 |
| Particulate Crunch Material (Ex. 1) | 30.0 |
| CPP-ACP | 0.276 |

A chewing gum composition was prepared according to the composition shown in Table 1 above. The chewing gum composition was prepared by first melting the gum base at a temperature of about 60°C to about 120°C. Once melted and placed in a standard mixer, the remaining ingredients were added and thoroughly mixed for about 1 to about 20 minutes. The gum was mixed until completion of the full mixing cycle. The resulting mix then was formed into the desired final shape employing conventional techniques, e.g. cast into pellets. The pellets were then coated with a coating formulation to form a crunchy outer coating on the surface of the gum core. A wax coating was further applied. The materials used in the outer coating composition are shown in Table 2.

**Table 2: Outer Coating Composition**

| Coating Component | % by weight of total coating |
|---|---|
| Maltitol (crystalline) | 91.5 |
| Gum arabic | 5.5 |
| Intense Sweeteners | 0.36 |
| Flavors | 1.24 |
| Ryoto Sugarester | 1.2 |
| *Wax | 0.23 |

| | |
|---|---|
| *added as a separate step | |

The final chewing formulation included 75% gum core and 25% outer coating (including the wax coat) by weight of the chewing gum formulation.

### Crunchy Chewing Gum containing Water-insoluble particulate material

Chewing gum samples are prepared using conventional methods employing the general gum formulation shown in the table below.

**Table 3: Crunchy Chewing Gum containing vitreous silica**

| Ingredient | A | B |
|---|---|---|
| Gum base | 15-40 | 15-40 |
| Softeners | 5-18 | 5-18 |
| Flavors | 0.1-5 | 0.1-5 |
| High Intensity Sweetener | 0.1-5 | 0.1-5 |
| Polyols | 40-70 | 40-70 |
| Particulate Crunch Material | - | up to 30% |
| Water-insoluble particulate material (e.g. vitreous silica) | 0.05 - 5 | 0.10 - 5 |

Chewing gum compositions are prepared according to the compositions shown in the table above. The chewing gum compositions are prepared by first melting the gum base at a temperature of about 60 to about 120°C. Once melted and placed in a standard mixer, the remaining ingredients are added and thoroughly mixed for about 1 to about 20 minutes. The gum is mixed until completion of the full mixing cycle. The resulting mix is then formed into the desired final shape employing conventional techniques, e.g. cast into pellets. The pellets can then be coated with a coating formulation similar to that used in Example 2 to form a crunchy outer coating on the surface of the gum core. A wax coating can be further applied.

### Example 3

### Preparation of a polyol composition having reduced moisture-absorbing properties

The method of making the polyol composition having reduced moisture-absorbing properties includes combining a polyol such as sorbitol, with particles of calcium silicate, fumed silica, talc, diatomaceous earth, pumice, kaolin, bentonite, zeolite, tricalcium phosphate, dicalcium phosphate, calcium carbonate, magnesium carbonate or a combination thereof. While the present example utilizes sorbitol, other polyols such as maltitol, xylitol, lactilol, and/or polyglycitol can also be used.

The sorbitol particles are mixed together with calcium silicate in an apparatus typically used to blend powders such as a ribbon blender or a V blender. For example, sorbitol particles are added to a ribbon blender and mixing is started. Calcium silicate particles are slowly added to the sorbitol particles and the particles are mixed until they are well blended. The ratio of sorbitol to calcium silicate is about 24:1 to 99:1.

The polyol particles are present in an amount of about 96 to about 99% by weight, while the particles of the inorganic material are present in an amount of about 1 to about 4% by weight based on the total weight of the polyol particles and the inorganic material.

Stability studies conducted at a high relative humidity showed that sorbitol coated with calcium silicate particles absorbs a significantly lower amount of water (10-20%) as compared to untreated sorbitol (50-80%) in the time frame tested.

### Example 4:

### Preparation of liquid center-filled chewing gum

Gum pieces including three regions, gum region, liquid fill and outer coating, are prepared according to the compositions outlined in Tables 4-6.

**Table 4: Gum Region**

| Component | A (Comparative) | B |
|---|---|---|
| Gum base | 15-40 | 15-40 |
| Pretreated sorbitol having reduced moisture-absorbing properties | - | 30-60 |
| Untreated sorbitol | 30-60 | - |
| Color | 0.01-2 | 0.01-2 |
| Flavor | 0.1-5 | 0.1-5 |
| High Intensity Sweetener | 0.1-5 | 0.1-5 |
| Other Polyols | 10-15 | 10-15 |

**Table 5: Liquid Fill Composition**

| Component | % by weight |
|---|---|
| Glycerin | 50-70 or 0.5-2% |
| Sorbitol solution (non-crystallizable) | 1-35 |
| Color | 0.001-0.2 |
| Flavors | 0.1-5 |
| High Intensity Sweetener | 0.01-1 |
| Hydrocolloid (e.g. xanthan gum carboxymethyl cellulose) | 0.001-2.5 |
| Hydrogenated starch hydrolysate (Lycasin ®) | 25-670 |

**Table 6: Outer Coating Composition**

| Component | % by weight |
|---|---|
| Maltitol | 90-97 |
| Gum arabic or Gelatin | 3-6 |
| Intense Sweeteners | 0.01-1.5 |
| Flavors | 0.1-5 |
| Colors | 0-1 |

The compositions for the gum regions are prepared by first heating the gum base at a temperature of 60 to 120°C. This combination is then mixed with the pretreated sorbitol composition having reduced moisture-absorbing properties of Example 3, and additional untreated polyols or bulking agents. The flavor blends are added and mixed for 1 minute. Finally, sweeteners are added and mixed for 5 minutes.

The liquid fill composition is then prepared by first preparing a pre-mix of hydrogenated starch hydrolysate, a hydrocolloid such as xanthan gum or carboxymethylcellulose, and glycerin. This premix is then combined with the colors, flavors, cooling agents, high intensity sweeteners, and any additional desirable ingredients, and mixed.

The gum region and the liquid fill composition are then extruded together and formed into pellets. The gum pieces each have a total weight of approximately 1-3 grams. In the final gum pieces, the gum region is about 40 to about 97% by weight, the liquid fill is about 2 to about 10% by weight, and the coating is about 25 % to about 40% by weight of the total gum composition.

Gum pieces prepared as described above, demonstrate no noticeable loss of liquidity of the liquid fill composition after aging at room temperature for a period of 12 weeks. The core center fill composition of Example A (Comparative) appears pasty with no free liquid, demonstrating a loss in the liquidity as of the liquid fill composition. In comparison, the core center fill composition of Example B exhibits liquidity. The center-fill chewing gum pieces incorporating sorbitol particles coated with the inorganic hygroscopic material (Example B) thus exhibit good stability. In particular, the liquid center-fill chewing gum pellets made from the polyol compositions having reduced moisture-absorbing properties exhibit good stability without evidence of the center-fill composition being absorbed by the gum region. The center-fill chewing gum pellets also exhibit only minimal amounts of shrinkage.

As used herein the transitional term "comprising," (also "comprises," etc.) which is synonymous with "having", "including," "containing," or "characterized by," is inclusive or open-ended and does not exclude additional, unrecited elements or method steps, regardless of its use in the preamble or the body of a claim.

The singular forms "a," "an," and "the" include plural referents unless the context clearly dictates otherwise.

The endpoints of all ranges directed to the same characteristic or component are independently combinable, and inclusive of the recited endpoint.

The word "or" means "and/or."

Providing can be accomplished by a manufacturer, distributor, or other seller that makes the product available to the consumer.

Reference throughout the specification to "one embodiment", "other embodiments", "an embodiment", and so forth, means that a particular element (e.g., feature, structure, and/or characteristic) described in connection with the embodiment is included in at least one embodiment described herein, and can or can not be present in other embodiments. In addition, it is to be understood that the described elements can be combined in any suitable manner in the various embodiments.

While the invention has been described with reference to an exemplary embodiment(s), it will be understood by those skilled in the art that various changes can be made and equivalents can be substituted for elements thereof without departing from the scope of the invention. In addition, many modifications can be made to adapt a particular situation or material to the teachings of the invention without departing from the essential scope thereof. Therefore, it is intended that the invention not be limited to the particular embodiment(s) disclosed as the best mode contemplated for carrying out this invention, but that the invention will include all embodiments falling within the scope of the appended claims.

### ANNEX TO THE DESCRIPTION:

1. A particulate crunch material comprising
   particles of a first polyol coated with a crunch material coating composition,
   wherein the crunch material coating composition comprises gum arabic.
2. The particulate crunch material of item 1, wherein the crunch material coating composition further comprises a polyol and wherein the polyol is the same polyol as the first polyol or different than the first polyol.
3. The particulate crunch material of item 2, wherein the polyol is present in an amount of about 10 to about 95% by weight based on the weight of the crunch material coating composition.
4. The particulate crunch material of any one of items 1-3, wherein the first polyol is present in an amount of about 50% to about 98% by weight based on the weight of the particulate crunch material.
5. The particulate crunch material of any one of items 1-4, wherein the first polyol is selected from the group consisting of hydrogenated isomaltulose, maltitol, xylitol, erythritol and a combination comprising at least one of the foregoing polyols.
6. The particulate crunch material of any one of items 1-5, wherein the crunch material coating composition comprises about 5 to about 50% by weight of gum Arabic based on the weight of the crunch material coating composition.
7. The particulate crunch material of any one of items 1-6, wherein gum arabic is present in an amount of about 0.5% to about 10% by weight based on the weight of the particulate crunch material.
8. The particulate crunch material of any one of items 1 -7, wherein the particulate crunch material has a D₉₀ particle size of less than 4 mm.
9. The particulate crunch material of any one of items 1-8, wherein the particulate crunch material has a D₉₀ particle size of less than 2 mm.
10. The particulate crunch material of any one of items 1 -9, wherein the particulate crunch material has a D₉₀ particle size of about 1 mm to about 1.4 mm.
11. The particulate crunch material of any one of items 1-10, wherein the first polyol has a D₉₀ particle size of about 0.5 mm to about 4 mm.
12. The particulate crunch material of any one of items 1-11, wherein the weight ratio of the first polyol to the gum arabic is about 4:1 to about 1:1.
13. A polyol composition having reduced moisture-absorbing properties comprising:
   particles of a polyol selected from sorbitol, maltitol, xylitol, lactilol, polyglycitol or a combination comprising at least one of the foregoing polyols; and
   particles of an inorganic material;
   wherein the particles of the inorganic material are coated on the polyol particles.
14. The polyol composition of item 13, wherein the inorganic material is selected from the group consisting of fumed silica, calcium silicate, talc, diatomaceous earth, pumice, kaolin, bentonite, zeolite tricalcium phosphate, dicalcium phosphate, calcium carbonate, magnesium carbonate and a combination comprising at least one of the foregoing inorganic materials.
15. The polyol composition of item 13 or item 14, wherein the inorganic material is present in an amount of about 1 to about 4% by weight based on the total weight of the particles of polyol and the particles of inorganic material.
16. The polyol composition of any one of items 13-15, wherein the particles of the inorganic material have a D₅₀ particle size of less than 50 µm.
17. The polyol composition of any one of items 13-16, wherein the wherein the polyol particles have a D₅₀ particle size of less than 50 µm after coating with the inorganic material.
18. A crunchy chewing gum composition comprising
   a gum core comprising a gum base and a particulate crunch material, the particulate crunch material comprising particles of a first polyol coated with a crunch material coating composition,
   wherein the crunch material coating composition comprises gum arabic.
19. The chewing gum composition of item 18, wherein the crunch material coating composition further comprises a polyol and wherein the polyol is the same polyol as the first polyol or different than the first polyol.
20. The chewing gum of item 18 or item 19, wherein the first polyol is selected from the group consisting of hydrogenated isomaltulose, maltitol, xylitol, erythritol and a combination comprising at least one of the foregoing polyols.
21. The chewing gum of any one of items 19-20, wherein the polyol in the crunch material coating composition syrup is selected from the group consisting of hydrogenated isomaltulose, maltitol, xylitol, erythritol and a combination comprising at least one of the foregoing polyols.
22. The chewing gum of any one of items 18-21, wherein the particulate crunch material has a D₉₀ particle size of about 1 to about 1.4 mm.
23. The chewing gum of any one of items 18-22, wherein the crunch material coating composition comprises about 50 to about 98 % by weight of the first polyol.
24. The chewing gum of any one of items 19-23, wherein the polyol and the first polyol are both hydrogenated isomaltulose.
25. The chewing gum of any one of items 18-24, wherein the crunch material coating composition comprises about 5 to about 50 % by weight of gum arabic.
26. The chewing gum of any one of items 18-25, wherein the particulate crunch material comprises about 0.5% to about 10% by weight of gum arabic based on the total weight of the particulate crunch material.
27. The chewing gum of any one of items 18-26, wherein the particulate crunch material is present in the gum core in an amount of about 10 to about 50% by weight based on the weight of the gum core.
28. The chewing gum of any one of items 18-27, further comprising a water-insoluble particulate material having a D₅₀ particle size of about 5 µm to about 60 µm.
29. The chewing gum of item 28, wherein the water-insoluble particulate material has a D₅₀ particle size of about 12µm.
30. The chewing gum of item 28 or item 29, wherein the water-insoluble particulate material is present in an amount of about 0.01 to about 5% by weight based on the weight of the gum core.
31. The chewing gum of any one of items 28-30, wherein the water-insoluble particulate material is selected from the group consisting of vitreous silica, pumice, diatomaceous earth, kaolin, bentonite, zeolite, tricalcium phosphate, calcium carbonate, magnesium carbonate and a combination comprising at least one of the foregoing particulate materials.
32. The chewing gum of any one of items 18-31, wherein the gum core further comprises about 1 to about 50% by weight of an untreated polyol.
33. The chewing gum of any one of items 18-32, further comprising a crunchy outer coating on the chewing gum core.
34. The chewing gum of item 33, wherein the crunchy outer coating comprises a polyol selected from the group consisting of maltitol, hydrogenated isomaltulose, erythritol, xylitol and a combination comprising at least one of the foregoing polyols.
35. The chewing gum of any one of items 18-34, wherein the weight ratio of the first polyol to the gum arabic is about 4:1 to about 1:1.
36. A chewing gum composition comprising:
   a liquid-fill composition;
   a gum region surrounding the liquid fill composition, the gum region comprising a gum base and a polyol composition having reduced moisture-absorbing properties; and
   an optional outer coating surrounding the gum region,
   wherein the polyol composition comprises particles of hygroscopic polyol and particles of an inorganic material, and wherein particles of the hygroscopic polyol are coated with particles of the inorganic material.
37. The chewing gum of item 36, wherein after a period of about 3 weeks the chewing gum composition exhibits a reduced loss of the liquid fill composition.
38. The chewing gum of item 36 or item 37, wherein the hygroscopic polyol is selected from the group consisting of sorbitol, maltitol, xylitol, lactilol, polyglycitol, and a combination comprising at least one of the foregoing hygroscopic polyols.
39. The chewing gum of any one of items 36-38, wherein the inorganic material is selected from the group consisting of fumed silica, calcium silicate, talc, diatomaceous earth, pumice, kaolin, bentonite, zeolite, tricalcium phosphate, dicalcium phosphate, calcium carbonate, magnesium carbonate and a combination comprising at least one of the foregoing inorganic materials.
40. The chewing gum of any one of items 36-39, wherein the polyol composition having reduced moisture-absorbing properties is present in an amount greater 10% by weight based on the total weight of the chewing gum composition.
41. The chewing gum of any one of items 36-40, wherein the liquid fill composition comprises up to about 20% by weight of the chewing gum composition and the gum region comprises from about 40% to about 97% by weight of the chewing gum composition.
42. The chewing gum of any one of items 36-41, wherein the polyol composition having reduced moisture-absorbing properties has a D₅₀ particle size of less than 50 µm.
43. The chewing gum of any one of items 36-42, wherein the inorganic material has a D₅₀ particle size of less than 50 µm.

## Claims

1. A crunchy chewing gum composition comprising
a gum core comprising a gum base, a particulate crunch material and a water-insoluble particulate material,
wherein the particulate crunch material comprises particles of a polyol coated with a crunch material coating composition, and wherein the crunch material coating composition comprises gum arabic.

2. The chewing gum of claim 1, wherein the crunch material coating composition comprises about 5 to about 50 % by weight of gum arabic based on the total weight of the crunch material coating composition.

3. The chewing gum of any one of claims 1-2, wherein the water-insoluble particulate material has a D₅₀ particle size of about 5 µm to about 60 µm.

4. The chewing gum of any one of claims 1-3, wherein the water-insoluble particulate material is present in an amount of about 0.01 to about 5% by weight based on the weight of the gum core.

5. The chewing gum of any one of claims 1-4, wherein the water-insoluble particulate material is selected from vitreous silica, pumice, diatomaceous earth, kaolin, bentonite, zeolite, tricalcium phosphate, calcium carbonate, magnesium carbonate and a combination comprising at least one of the foregoing particulate materials.

6. The chewing gum of any one of claims 1-5, wherein a weight ratio of the particles of polyol to gum arabic is 10:1 to 0.5:1.
